# EUROPÄISCHE PATENTSCHRIFT

(11) **EP 0 638 176 B1**
(45) Veröffentlichungstag und Bekanntmachung des Hinweises auf die Patenterteilung: **18.09.1996**
(21) Anmeldenummer: 93908914.0
(22) Anmeldetag: 06.04.1993
(51) Int. Cl.: G01P 3/44

(54) **VORRICHTUNG ZUR MESSUNG VON DREHBEWEGUNGEN**
DEVICE FOR MEASURING ROTARY MOVEMENTS
DISPOSITIF DE MESURE DE MOUVEMENTS DE ROTATION

(30) Priorität: 29.04.1992 DE 4213979
(43) Veröffentlichungstag der Anmeldung: 15.02.1995
(73) Patentinhaber: ALFRED TEVES METALLWARENFABRIK GMBH & CO. OHG, D-51702 Bergneustadt (DE)
(72) Erfinder: GOOSSENS, André, F., L., B-2840 Rumst (BE)
(74) Vertreter: Blum, Klaus-Dieter, Dipl.-Ing.
(86) Internationale Anmeldenummer: EP9300846
(87) Internationale Veröffentlichungsnummer: WO9322687

(56) Entgegenhaltungen:
- EP-A- 0 226 826
- EP-A- 0 400 241
- DE-A- 2 244 948
- FR-A- 2 075 781
- FR-A- 2 659 450
- US-A- 3 683 219
- US-A- 4 027 753

## Beschreibung

Die Erfindung bezieht sich auf eine Vorrichtung zur Messung von Drehbewegungen und zum Erzeugen eines die Drehbewegung darstellenden elektrischen Wechselsignals, die in der Drehachse des die Drehbewegung ausführenden Teils einbaubar ist, mit einem stationären Meßwertaufnehmer, der ein in einem Gehäuse angeordnetes Meßsystem aufweist, mit einem Signalgeberring, der als Bestandteil eines hohlzylinder- oder topfförmigen Bauteils ausgebildet ist. und der mit dem die Drehbewegung ausführenden Teil koppelbar ist.

Eine derartige Vorrichtung ist aus der Europäischen Patentanmeldung EP-A-0 226 828 bekannt. Beschrieben wird in dieser Druckschrift die Befestigung eines Tachogenerators an einer Antriebswelle. Der Stator des Tachogenerators ist mit einem feststehenden Maschinenteil verbunden, während die im Anschlußbereich als Hohlwelle ausgebildete Antriebswelle den Rotor darstellt. Zur Lagerung des Rotors im Stator ist ein Kugellager vorgesehen. Zum Tachogenerator gehört eine mit Hilfe einer Schnellspanneinrichtung mit der rotierenden Hohlwelle gekoppelte Kodierscheibe und ein achsparallel angeordnetes, an dem Stator befestigtes Meßsystem, das wiederum aus einem am Umfang der Kodierscheibe angeordneten Sender und Empfänger besteht. Der gesamte Tachogenerator, bestehend aus Kodierscheibe und Meßsystem, ist in einem am Stator befestigten Gehäuse untergebracht.

Aus der europäischen Anmeldungsschrift EP-A-0 400 241 ist ebenfalls bereits eine an dem hohlen Endstück einer rotierenden Welle angeordnete Vorrichtung zur Messung der Drehbewegung dieser Welle bekannt. In einem an dem stationären Teil der Vorrichtung befestigten Gehäuse ist eine Meßspule angeordnet, die zur Messung der Drehbewegung mit einer auf dem Rotor befestigten Spule zusammenwirkt.

Die Erfindung beschäftigt sich mit Vorrichtungen dieser Art, die zur Messung der Radgeschwindigkeiten für Blockierschutzregelungs-, Antriebsschlupfregelungs- oder Fahrwerksregelungssysteme von Kraftfahrzeugen vorgesehen sind. Im allgemeinen ist bei diesen Systemen jedes Fahrzeugrad mit einer solchen Meßeinrichtung bzw. einem solchen Radsensor ausgerüstet. Die Anforderungen an die Funktionsfähigkeit und Zuverlässigkeit der Sensoren ist hoch. Ein nicht unerheblicher Teil der gesamten Kosten des Regelungssystems ist für die Herstellung und Montage der Sensoren aufzubringen. Insbesondere ist es bei den bekannten Meßvorrichtungen erforderlich, den Luftspalt zwischen dem stationären Meßwertaufnehmer bzw. Sensor und einer mit dem Rad gekoppelten Zahnscheibe sehr genau einzustellen und einzuhalten. Das Nutzsignal und der Abstand des Nutzsignals von unvermeidlichen Störsignalen wird nämlich weitgehend von der Einstellung und Einhaltung des Luftspaltes bestimmt. Daher ist man bemüht, Sensoren zu entwickeln, die mit relativ geringem Aufwand herzustellen sind und die auf einfache Weise montiert und gegebenenfalls ausgetauscht werden können.

Es sind auch bereits Radlagersensoren bekannt, bei denen der Sensor und der Impulsgeberring bzw. die Zahnscheibe direkt in das Radlager eingebaut werden (siehe "Automotive Engineering", April 91, "Advancements in vehicle wheel speed sensing technology..."). Dadurch wird der Platzbedarf für den Sensor gering. Nach wie vor ist jedoch eine genaue Montage und Justierung erforderlich, weil Toleranzen für den Luftspalt zwischen dem Sensor und dem Impulsgeberring eingehalten werden müssen.

Der Erfindung liegt nun die Aufgabe zugrunde, eine Meßvorrichtung zu entwickeln, die insbesondere für den Einbau in ein Radlager geeignet ist und die sich durch geringen Herstellungsaufwand, kompakten Aufbau und besonders durch eine einfache Montage und dennoch genaue Justage des Luftspaltes auszeichnet.

Es hat sich herausgestellt, daß diese Aufgabe durch eine Meßvorrichtung der eingangs genannten Art gelöst werden kann, deren Besonderheit darin besteht, daß der Meßwertaufnehmer in der Drehachse des die Drehbewegung ausführenden Teils angeordnet und arretierbar ist und ein zumindest teilweise zylinderförmiges Gehäuseteil aufweist, in das das Meßsystem eingebaut ist, und daß der Signalgeberring auf der Mantelfläche des Gehäuseteils des Meßwertaufnehmers drehbar gelagert ist.

Einige besonders vorteilhafte Ausführungsbeispiele der Erfindung sind in den beigefügten Unteransprüchen beschrieben.

Durch die Ausbildung des Signalgeberrings in Form eines hohlzylinderförmigen Bauteils, das unmittelbar auf dem Gehäuse des Meßwertaufnehmers drehbar gelagert ist und das bei der Montage des Sensors mit Hilfe eines Mitnehmers mit dem Rad gekoppelt wird, läßt sich eine besonders einfache Meßvorrichtung realisieren. Weil der Signalgeberring keinerlei Kräfte zu übertragen hat, dürfte es im allgemeinen genügen, zur Lagerung dieses Ringes auf dem Sensorgehäuse eine Gleitschicht aufzubringen.

Ferner ist es von Vorteil, daß der Signalgeberring bereits vor der Montage des Sensors auf diesen aufgesetzt werden kann, so daß dann bei dem Einbau der kompletten Meßvorrichtung in das Radlager eine Justierung entfällt.

Eine vorteilhafte Ausführungsart der Erfindung besteht darin, daß in dem Sensorgehäuse ein doppelseitiges Meßsystem senkrecht zur Drehachse angeordnet wird. Dadurch läßt sich eine Verbesserung des Nutzsignals selbst bei einem kompakten Aufbau des Meßwertaufnehmers erreichen. Außerdem werden die Anforderungen an die zentrale Lage des Meßwertaufnehmers in bezug auf den Signalgeberring geringer, weil eine Vergrößerung des Luftspaltes auf einer Seite zwangsläufig zur Verringerung des Luftspaltes auf der anderen Seite des doppelseitigen Meßsystems führt.

Ein besonders zweckmäßiges doppelseitiges Meßsystem besteht aus einer Meßspule, die einen senkrecht zur Meßspulenachse magnetisierten Permanentmagnetkern enthält. Auf den beiden Polflächen dieses Permanentmagneten sind jeweils ein langgestreckter, plattenförmiger Polschuh angeordnet, wobei die Polschuhe beidseitig aus der Spule herausragen und nahezu bis zur Innenfläche des Signalgebergehäuses reichen. Bei einer geschickten Anordnung der Polschuhe in Relation zu der Anordnung der Zähne oder magnetischen Segmente des Signalgeberrings läßt sich erreichen, daß der Magnetfluß im Kern der Meßspule als Folge der Drehbewegung ständig seine Richtung ändert und dadurch ein vergleichsweise hohes Nutzsignal in der Meßspule induziert.

Weitere Merkmale, Vorteile und Anwendungsmöglichkeiten der Erfindung gehen aus der folgenden Beschreibung von Ausführungsbeispielen anhand der Abbildungen hervor.

Es zeigen
- Fig. 1: in schematisch vereinfachter Seitenansicht eine Meßvorrichtung nach der Erfindung,
- Fig. 2: im Längsschnitt eine Ausführungsart der Meßvorrichtung nach Fig. 1,
- Fig. 3: in gleicher Darstellungsweise wie Fig. 2, jedoch verkleinert, eine weitere Ausführungsart einer Meßvorrichtung nach der Erfindung, und
- Fig. 4: in gleicher Darstellungsweise wie Fig. 2 eine ähnliche Anordnung mit einem abgewandelten Signalgeberring.

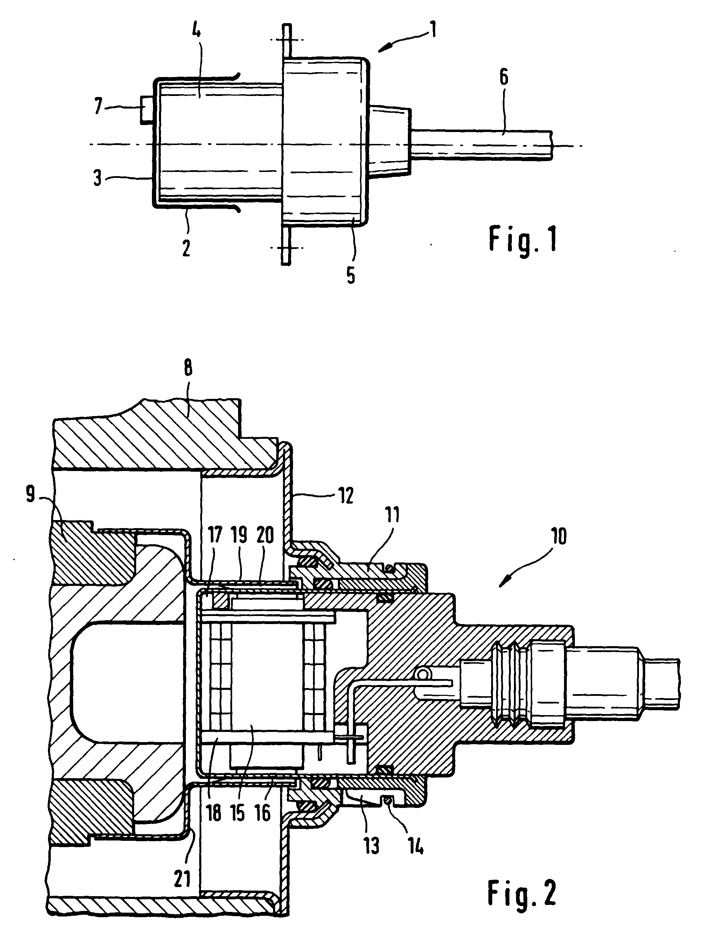

Nach Fig. 1 besteht die erfindungsgemäße Vorrichtung aus einem Meßwertaufnehmer 1, im allgemeinen als Sensor bezeichnet, und aus einem Signalgeberring 2, der hier Bestandteil eines topfförmigen Signalgeberbauteils 3 ist.

Der Meßwertaufnehmer oder Sensor 1 besitzt ein zylinderförmiges Gehäuseteil 4, in dem das eigentliche Meßsystem angeordnet ist und auf dem der Signalgeberring 2 drehbar aufgesetzt und gelagert ist. Ein Gehäuseteil 5 des Meßwertaufnehmers dient vor allem zur Halterung und Befestigung des Sensors 1 an einem stationären Bauteil des Kraftfahrzeugs oder des Radlagers. Außerdem wird durch dieses Bauteil 5 ein elektrisches Kabel 6 zum Anschluß des Meßwertaufnehmers 1 an eine in Fig. 1 nicht dargestellte Auswertungslogik geführt.

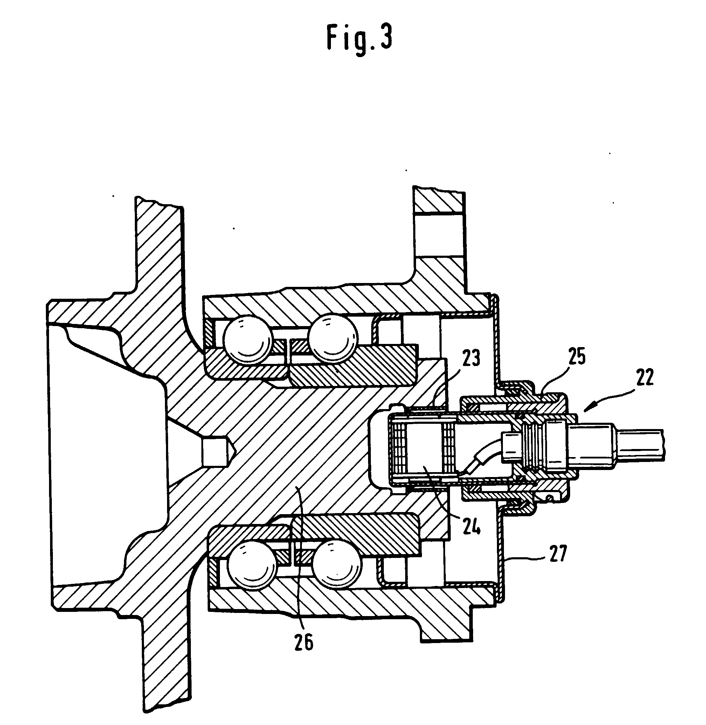

Das Signalgeberbauteil 3 ist mit einem in Fig. 1 symbolisch angedeuteten Mitnehmer 7 ausgerüstet. Bei der Montage der dargestellten Meßvorrichtung im Radlager - siehe Fig. 2 und 3 - greift der Mitnehmer 7 in eine entsprechende Aussparung des Rades oder des die Drehung ausführenden Radlagerteils ein, so daß das Signalgeber-bauteil 3 mit dem die zu messende Drehbewegung ausführenden Teil umläuft; der Meßwertaufnehmer 1 ist dagegen in der Drehachse, die in Fig. 1 strichpunktiert symbolisiert ist, stationär gehaltert.

Fig. 2 zeigt in Details eine nach dem anhand der Fig. 1 geschilderten Prinzip aufgebaute Meßvorrichtung, die in diesem Fall in ein Radlager eines Fahrzeugs eingebaut ist. Mit 8 ist Teil des feststehenden Radlageraußenrings, mit 9 das Endstück des entsprechenden Radlagerinnenrings, der sich mit dem Rad dreht, bezeichnet. Es handelt sich in diesem Falle um einen steckbaren Meßwertaufnehmer bzw. Sensor 10, der in einer Halterung 11 sitzt, die hier in die Fettkappe 12 des Radlagers 8,9 eingefügt ist oder als ein Bestandteil dieser Fettkappe 12 ausgebildet ist. In der Halterung 11 wird der Sensor 10 mit Hilfe einer Rastnase 13, die in eine entsprechende Aussparung der hülsenförmigen Halterung 11 eingreift, in vorgegebener Winkellage gehaltert. Eine Feder 14 gehört ebenfalls zu dem Halterungsmechanismus. Eine solche Halterung zeichnet sich durch einfachen Aufbau aus und gestattet vor allem eine sehr schnelle Montage und Demontage.

Es handelt sich hier um einen induktiven Meßwertaufnehmer. Das Meßsystem enthält eine doppelseitige Meßspule 15, die senkrecht zu der Achse des Sensors 10, die mit der Drehachse des (nicht gezeigten) Rades zusammenfällt, angeordnet ist. Die Meßspule 15, deren Einzelteile hier nicht zeichnerisch dargestellt sind, besitzt vorzugsweise einen Permanentmagnetkern und Polschuhe, die beidseitig aus dem Spuleninneren herausragen und bis zu der Wandung 16 des zylinderförmigen Gehäuseteils 17 des dargestellten Sensors 10 reichen. Die Meßspule selbst, in deren Inneren sich der Permanentmagnetkern und die Polschuhe befinden, setzt sich im wesentlichen aus einem Spulenkörper 18 und aus mindestens einer Wicklung zusammen.

Auf dem zylinderförmigen Gehäuse 17 ist ein bereits anhand der Fig. 1 erläuterter Signalgeberring drehbar in Relation zu dem feststehenden Sensor 10 angeordnet. Der Signalgeberring 19 besitzt eine Innenverzahnung 20. Der Wechsel von Zähnen und Zahnlücken als Folge einer Drehbewegung führt in bekannter Weise zur Änderung eines Magnetflusses, den ein im Inneren der Meßspule 15 angeordneter Permanentmagnet erzeugt. Diese Änderung des Magnetflusses führt wiederum zur Induktion einer Spannung in der Wicklung der Meßspule 15. Anstelle der Innenverzahnung kann natürlich auch ein gelochter Ring oder ein aus magnetischen und nichtmagnetischen Segmenten bestehender Ring verwendet werden.

Der Signalgeberring 19 ist in Fig. 2 als Bestandteil eines topfförmigen oder gestuften, hohlzylinderförmigen Bauteils 21 ausgebildet, der in diesem Ausführungsbeispiel durch Paßsitz oder durch einen Mitnehmer mit dem Lagerinnenring 9, der sich mit dem Rad dreht, gekoppelt ist. Da der zylinderförmige, den Signalgeberring 19 bildende oder tragende Teil des Signalgeber-Bauteils 21 aus dem zylinderförmigen Gehäuse des Sensors 10 gelagert ist und keinerlei Kräfte zu übertragen braucht, erübrigt sich eine stabile Befestigung des Bauteils 21 an dem Lagerinnenring 9; es muß lediglich gewährleistet sein, daß das Signalgeber-Bauteil 21 von dem die Drehbewegung ausführenden Bauteil "mitgenommen" wird. Diese Anforderungen sind durch eine relativ einfache Konstruktion, die eine einfache und schnelle Montage und ggf. auch Aus-. tausch der kompletten Meßvorrichtung nach der Erfindung erlaubt, zu verwirklichen.

Die Ausführungsart der Erfindung nach Fig. 3 unterscheidet sich von der Konstruktion nach Fig. 2 durch einen noch kompakteren Aufbau der Meßvorrichtung. Der Meßwertaufnehmer 22 wird in diesem Fall zusammen mit dem bereits zuvor drehbar auf dem Sensorgehäuse aufgesetzten Signalgeberring 23 in eine dafür vorgesehene Halterung eingesteckt. Im Sensorgehäuse im Bereich des Signalgeberringes 23 befindet sich wiederum eine doppelseitige, senkrecht zu der Drehachse angeordnete Meßspule 24. Eine Halterung 25 zur Aufnahme, Positionierung und Arretierung des eingesteckten Sensors 22 ist wiederum als Bestandteil der Radlager-Fettkappe 27 ausgebildet. Für den Signalgeberring 23 ist eine axiale Bohrung in der drehbar gelagerten Welle 26 eines Rades vorgesehen. Beim Einstecken der kompletten, aus Signalgeberring 23 und Sensor 22 bestehenden Meßvorrichtung wird in irgendeiner bekannten Weise der Signalgeberring 23 mit der Radwelle 26 in Eingriff gebracht, damit der Signalgeberring 23 mit dem Rad auf dem zylinderförmigen Gehäuse des stationären Meßwertaufnehmers 22 umlaufen kann. Bei einer solchen Konstruktion wird lediglich durch das Einstecken, ohne zusätzliche Justage, die Einstellung des Luftspaltes zwischen dem Gehäuse des Sensors 22 und dem Signalgeberring 23 innerhalb enger Toleranzen gewährleistet.

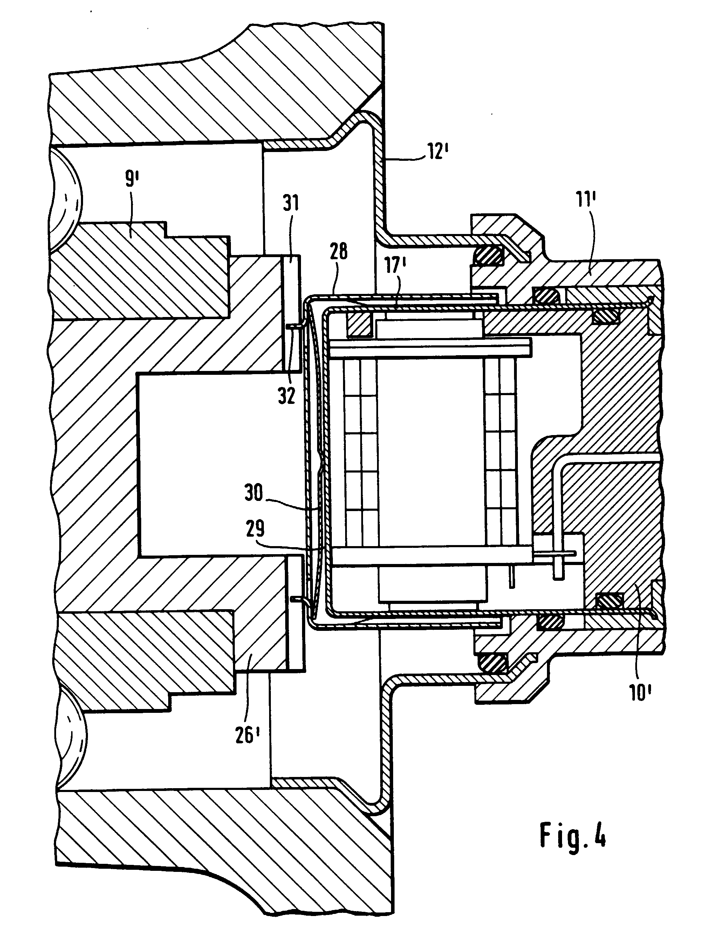

Fig. 4 zeigt eine Ausführungsvariante nach der Erfindung, bei der die Kopplung eines Signalgeberrings 28 mit dem Lagerinnenring 9' oder einem Achsschenkel, der sich mit dem die Drehbewegung ausführenden Teil dreht, auf besonders geschickte Weise gelöst ist. Im übrigen ähnelt der Aufbau des Sensors 10', der Halterung 11' und deren Einfügung in eine Fettkappe 12' weitgehend dem anhand der Fig. 2 beschriebenen Ausführungsbeispiel.

Der Signalgeberring 28 der Vorrichtung nach Fig. 4 ist wiederum auf dem zylinderförmigen Gehäuseteil 17' des Sensors 10' gelagert. Mit Hilfe einer sich auf der Stirnfläche 29 des Sensorgehäuses abstützenden Blattfeder 30 wird in diesem Ausführungsbeispiel der Signalgeberring 28 gegen den mit einer Verzahnung 31 versehenen Lagerinnenring gedrückt. Nocken 32, die mit dem Mitnehmer 7 nach Fig. 1 vergleichbar sind, sorgen dafür, daß die Drehbewegung des Innenringes 9' auf den Signalgeberring 28 übertragen wird.

Diese Konstruktion erlaubt die Verwendung sehr kleiner Zahnräder, weil der Luftspalt zwischen dem Signalgeberring 28 und den Sensorpolschuhen sehr klein gehalten werden kann. Auch ist die Sensorsignalgröße weitgehend unabhängig von den üblicherweise auftretenden Lagerverformungen.

## Patentansprüche

1. Vorrichtung zur Messung von Drehbewegungen und zum Erzeugen eines die Drehbewegung darstellenden elektrischen Wechselsignals,
die in der Drehachse des die Drehbewegung ausführenden Teils (26,26') einbaubar ist,
mit einem stationären Meßwertaufnehmer (1,10,10',22), der ein in einem Gehäuse (17,17') angeordnetes Meßsystem (15,24) aufweist,
mit einem Signalgeberring (2,19,23,28), der als Bestandteil eines hohlzylinder- oder topfförmigen Bauteils (3,21) ausgebildet ist und der mit dem die Drehbewegung ausführenden Teil (26,26') koppelbar ist, dadurch **gekennzeichnet**, daß der Meßwertaufnehmer (1,10,10',22) im Verwendungsfall in der Drehachse des die Drehbewegung ausführenden Teils (26,26') angeordnet und arretierbar ist und ein zumindest teilweise zylinderförmiges Gehäuseteil (4) aufweist, in das das Meßsystem (15,24) eingebaut ist, und daß der Signalgeberring (2,19,23,28) auf der Mantelfläche des Gehäuseteils (4) des Meßwertaufnehmers (1,10,10',22) drehbar gelagert ist.

2. Vorrichtung nach Anspruch 1, dadurch **gekennzeichnet**, daß das Meßsystem (15,24) eine in dem Gehäuse des Meßwertaufnehmers (1,10,10',22) in senkrechter Anordnung zu der Drehachse des die Drehbewegung ausführenden Teils (26,26') eingebaute Meßspule (15) aufweist, die einen Permanentmagneten und einen oder mehrere, zur Drehachse bzw. zur Achse des Gehäuses (17,17') senkrecht angeordnete Polschuhe umgibt, deren Endstücke aus der Spule (15) herausragen und nahezu bis zur Innenfläche des Signalgeberrings (2,19,23,28) reichen.

3. Vorrichtung nach Anspruch 1 oder 2, dadurch **gekennzeichnet**, daß ein doppelseitiges Meßsystem vorhanden ist, das eine senkrecht bzw. rechtswinklig zur Achse des Gehäuses angeordnete Meßspule (15) mit einem senkrecht zur Meßspulenachse magnetisierten Permanentmagnetkern und mit parallel zu der Meßspulenachse, auf den Polflächen des Permanentmagneten angeordneten Polschuhen aufweist, deren Endstücke beidseitig aus der Spule (15) herausragen und nahezu bis zu der Innenfläche des Signalgeberrings (2,19,23,28) reichen.

4. Vorrichtung nach einem oder mehreren der Ansprüche 1 bis 3, dadurch **gekennzeichnet**, daß der Signalgeberring (2,19,23,28) in Form eines Hohlzylinders ausgebildet ist, der eine Innenverzahnung (20) aufweist.

5. Vorrichtung nach Anspruch 3 und 4, dadurch **gekennzeichnet**, daß die Innenverzahnung (20) und die Polschuhe derart ausgebildet und angeordnet sind, daß stets, wenn ein Endstück eines Polschuhes einem Zahn gegenübersteht, das diametrale Endstück des zweiten Polschuhes ebenfalls einem Zahn, die beiden anderen Endstücke der Polschuhe Zahnlücken gegenüberstehen.

6. Vorrichtung nach einem oder mehreren der Ansprüche 1 bis 5, dadurch **gekennzeichnet**, daß die Mantelfläche des Gehäuseteils (4) und/oder die auf dem Gehäuse (17,17') aufliegende Fläche des Signalgeberrings (2,19,23,28) mit einem Gleitbelag beschichtet sind.

7. Vorrichtung nach einem oder mehreren der Ansprüche 1 bis 6, dadurch **gekennzeichnet**, daß der Meßwertaufnehmer (1,10,10',22) in Form eines in eine Halterung (11,22), die an dem feststehenden Teil (8) eines Radlagers befestigbar ist, einsteckbaren, positionierbaren und in vorgegebener Lage arretierbaren Körpers ausgebildet ist.

8. Vorrichtung nach Anspruch 7, dadurch **gekennzeichnet**, daß der Meßwertaufnehmer (1,10,10',22) zusammen mit dem zuvor aufgesetzten Signalgeberbauteil (3,21,23) in die Halterung (22) einsteckbar ist, wobei mit Hilfe eines an den Signalgeberbauteil (3,21,23) und/oder an dem die Drehbewegung ausführenden Teil (26,26') des Radlagers (9,9') befestigbaren Mitnehmer (7,32) die Kopplung zwischen dem Signalgeberring (2,19,23,28) und dem die Drehbewegung ausführenden Teil (26,26') herbeiführbar ist.

9. Vorrichtung nach einem oder mehreren der Ansprüche 1 bis 8, dadurch **gekennzeichnet**, daß das hohlzylinder- oder topfförmige Bauteil (3,21) mit dem die Drehbewegung ausführenden Teil mit Hilfe eines Mitnehmers (7,32) oder durch Paßsitz gekoppelt ist.

## Claims

1. A device for measuring rotation and for generating an electric alternating signal representative of rotation, which device is adapted to be mounted into the axis of rotation of the part (26, 26') performing the rotation, including a stationary transducer (1, 10, 10', 22) having a measurement system (15, 24) positioned in a housing (17, 17'), and a signal generator ring (2, 19, 23, 28) which is part of a hollow-cylindrical or bowl-shaped component part (3, 21) and is adapted to be coupled with the part (26, 26') performing the rotation,
**characterized** in that the transducer (1, 10, 10', 22) in the case of application is arranged and can be locked in the axis of rotation of the part (26, 26') performing the rotation and has an at least partly cylindrical housing portion (4) in which the measurement system (15, 24) is incorporated, and in that the signal generator ring (2, 19, 23, 28) is rotatably supported on the peripheral surface of the housing part (4) of the transducer (1, 10, 10', 22).

2. A device as claimed in claim 1,
**characterized** in that the measurement system (15, 24) includes a measuring coil (15) which is mounted in the housing of the transducer (1, 10, 10', 22) perpendicularly relative to the axis of rotation of the part (26, 26') performing the rotation, the measuring coil having a permanent magnet and one or more pole shoes which are arranged perpendicularly to the axis of rotation or, respectively, the axis of the housing (17, 17'), and the end pieces of the pole shoes project from the coil (15) and extend generally to the inner surface of the signal generator ring (2, 19, 23, 28).

3. A device as claimed in claim 1 or 2,
characterized in that a double-sided measurement system includes a measuring coil (15) arranged perpendicularly or at right angles to the axis of the housing and having a permanent magnetic core, magnetized perpendicularly to the measuring coil axis, and pole shoes that are arranged on the pole surfaces of the permanent magnet in parallel to the measuring coil axis, the end pieces of which pole shoes project on either side of the coil (15) and extend generally to the inner surface of the signal generator ring (2, 19, 23, 28).

4. A device as claimed in any one or more of the claims 1 to 3, **characterized** in that the signal generator ring (2, 19, 23, 28) includes a hollow cylinder portion having an internal toothing (20).

5. A device as claimed in claims 3 and 4,
**characterized** in that the internal toothing (20) and the pole shoes are designed and arranged such that, when one end piece of a pole shoe is opposite to a tooth, the diametral end piece of the second pole shoe is simultaneously opposite to a tooth, while the other two end pieces of the pole shoes are simultaneously opposite tooth gaps.

6. A device as claimed in any one or more of the claims 1 to 5, **characterized** in that the peripheral surface of the housing part (4) and/or the surface of the signal generator ring (2, 19, 23, 28) abutting on the housing (17, 17') is coated with a sliding layer.

7. A device as claimed in any one or more of the claims 1 to 6, **characterized** in that the transducer (1, 10, 10', 22) is provided in the shape of an element which can be slipped, positioned and locked in a predetermined position in a mounting support (11, 22), the mounting support being adapted to be secured to the stationary part (8) of a wheel bearing.

8. A device as claimed in claim 7,
**characterized** in that the transducer (1, 10, 10', 22) together with the previously mounted signal generator component part (3, 21, 23) can be slipped into the mounting support (22), and the coupling between the signal generator ring (2, 19, 23, 28) and the part (26, 26') performing the rotation can be effected by means of a follower (7, 32), which is adapted to be secured to the signal generator component part (3, 21, 23) and/or to the part (26, 26') of the wheel bearing (9, 9') performing the rotation.

9. A device as claimed in any one or a plurality of claims 1 to 8,
**characterized** in that the hollow-cylindrical or bowl-shaped component part (3, 21) is coupled to the part performing the rotation by means of a follower (7, 32) or by a snug fit.

## Revendications

1. Dispositif pour mesurer des mouvements de rotation et pour produire un signal électrique alternatif représentant le mouvement de rotation, ce dispositif pouvant être monté dans l'axe de rotation de la pièce (26, 26') accomplissant le mouvement de rotation, avec un transducteur stationnaire (1, 10, 10', 22) qui présente un système de mesure (15, 24) disposé dans un boîtier (17, 17'), et avec une bague génératrice de signaux (2, 19, 23, 28), qui est réalisée comme partie d'une pièce (3, 21) en forme de cylindre creux ou de pot et qui peut être couplée à la pièce (26, 26') accomplissant le mouvement de rotation, **caractérisé** en ce que le transducteur (1, 10, 10', 22), en utilisation, est disposé dans l'axe de rotation de la pièce (26, 26') accomplissant le mouvement de rotation et peut être bloqué, et il présente une partie de boîtier (4) au moins partiellement cylindrique dans laquelle est monté le système de mesure (15, 24), et en ce que la bague génératrice de signaux (2, 19, 23, 28) est montée à rotation sur la face d'enveloppe de la partie de boîtier (4) du transducteur (1, 10, 10', 22).

2. Dispositif selon la revendication 1, **caractérisé** en ce que le système de mesure (15, 24) présente une bobine de mesure (15) montée dans le boîtier du transducteur (1, 10, 10', 22) en disposition perpendiculaire à l'axe de rotation de la pièce (26, 26') accomplissant le mouvement de rotation, bobine qui entoure un aimant permanent et une ou plusieurs cornes polaires disposées perpendiculairement à l'axe de rotation ou encore à l'axe du boîtier (17, 17'), cornes dont les extrémités dépassent hors de la bobine (15) et s'étendent presque jusqu'à la face intérieure de la bague génératrice de signaux (2, 19, 23, 28).

3. Dispositif selon la revendication 1 ou 2, **caractérisé** en ce qu'un système de mesure bilatéral est présent, qui présente une bobine de mesure (15) disposée perpendiculairement ou encore orthogonalement à l'axe du boîtier, avec un noyau d'aimant permanent magnétisé perpendiculairement à l'axe de la bobine de mesure et avec des cornes polaires disposées parallèlement à l'axe de la bobine de mesure sur les faces polaires de l'aimant permanent, cornes dont les extrémités dépassent de part et d'autre hors de la bobine (15) et s'étendent presque jusqu'à la face intérieure de la bague génératrice de signaux (2, 19, 23, 28).

4. Dispositif selon une ou plusieurs des revendications 1 à 3, **caractérisé** en ce que la bague génératrice de signaux (2, 19, 23, 28) est réalisée sous la forme d'un cylindre creux qui présente une denture intérieure (20).

5. Dispositif selon la revendication 3 ou 4, **caractérisé** en ce que la denture intérieure (20) et les cornes polaires sont configurées et disposées de telle sorte que, lorsqu'une extrémité d'une corne polaire fait face à une dent, l'extrémité diamétralement opposée de la deuxième corne polaire fait toujours également face à une dent, et les deux autres extrémités des cornes polaires font face à des entredents.

6. Dispositif selon une ou plusieurs des revendications 1 à 5, **caractérisé** en ce que la face d'enveloppe de la partie de boîtier (4) et/ou la face de la bague génératrice de signaux (2, 19, 23, 28) qui repose sur le boîtier (17, 17') sont recouvertes d'un revêtement de glissement.

7. Dispositif selon une ou plusieurs des revendications 1 à 6, **caractérisé** en ce que le transducteur (1, 10, 10', 22) est réalisé sous la forme d'un corps qui peut être emboîté, positionné et immobilisé en position prédéfinie dans un support (11, 22) qui peut être fixé sur la partie fixe (8) d'un roulement de roue.

8. Dispositif selon la revendication 7, **caractérisé** en ce que le transducteur (1, 10, 10', 22) peut être emboîté dans le support (22) conjointement avec la pièce génératrice de signaux (3, 21, 23) préalablement montée sur le transducteur, le couplage entre la bague génératrice de signaux (2, 19, 23, 28) et la pièce (26, 26') accomplissant le mouvement de rotation pouvant être produit à l'aide d'un entraîneur (7, 32) pouvant être fixé sur la pièce génératrice de signaux (3, 21, 23) et/ou sur la pièce (26, 26'), accomplissant le mouvement de rotation, du roulement de roue (9, 9').

9. Dispositif selon une ou plusieurs des revendications 1 à 8, **caractérisé** en ce que la pièce (3, 21) en forme de cylindre creux ou de pot est couplée à la pièce accomplissant le mouvement de rotation à l'aide d'un entraîneur (7, 32) ou par ajustement fin.
